# EUROPEAN PATENT SPECIFICATION

(11) **EP 1 477 519 B1**
(45) Date of publication and mention of the grant of the patent: **07.08.2013**
(21) Application number: 03380302.4
(22) Date of filing: 22.12.2003
(51) Int. Cl.: C08K 5/00, C09D 5/02, C09D 7/12, A23L 3/3472, B65D 65/42

(54) **Antioxidant active varnish**
Wirksamer Antioxidantien-Lack
Vernis antioxydant actif

(30) Priority: 16.05.2003 ES 200301138
(43) Date of publication of application: 17.11.2004
(73) Proprietor: Artibal, S.A., 22600 Sabinanigo (Huesca) (ES)
(72) Inventor: Gardes Lardiés, Oscar, 22600 Sabinanigo (Huesca) (ES); Nerin de la Puerta, Cristina, 22600 Sabinanigo (Huesca) (ES); Beltran Garcia, José Antonio, 22600 Sabinanigo (Huesca) (ES); Roncalés Rabinal, Pedro, 22600 Sabinanigo (Huesca) (ES)
(74) Representative: Hernández Hernández, Carlos

(56) References cited:
- US-A- 5 061 403
- DATABASE WPI Section Ch, Week 199032 Derwent Publications Ltd., London, GB; Class A18, AN 1990-243886 XP002295323 & JP 02 171171 A (TAIYO KAGAKU KK) 2 July 1990 (1990-07-02)
- DATABASE WPI Section Ch, Week 197845 Derwent Publications Ltd., London, GB; Class A92, AN 1978-81449A XP002295324 & JP 53 038186 B (DAINIPPON PRINTING CO LTD) 13 October 1978 (1978-10-13)

## Description

The object of the present invention is an antioxidant active varnish, from among varnishes applied on supports or films containing various products, such as food, in order to provide an antioxidant protection of the packaged product to improve its quality and acceptability.

The present invention is characterized by the use of varnishes as a vehicle of a vapour phase for food preservation. This will allow applying it to various supports in different applications, according to each case.

Additionally, the varnish object of the invention provides an antioxidant atmosphere that can protect a wide range of product (food, cosmetics, pharmaceutical products) from oxidation processes, thereby extending the lifetime of the packaged product.

Thus, the object of the invention lies within the field of varnishes used as means for covering the support means used to package and preserve products, mainly food, in order to improve the characteristics of the package and the packaged product.

### BACKGROUND OF THE INVENTION

Once initiated, an oxidation reaction will continue accelerating until a total oxidation of the sensitive substances. Oxidation causes stale flavour, alterations of the colour and texture, decreased nutritional value as vitamins and polyunsaturated fatty acids are lost, and may lead to health hazards.

To prevent oxidation of food in their containers, the food industry adds antioxidants to the product in both vacuum and opaque containers. These antioxidants stop the fat oxidation chain reaction and eliminate oxygen trapped or dissolved in the product.

Hitherto, active packaging are one of the most important innovations for food preservation. These packaging are meant to provide additional protection for the packaged product, using the interaction between the element or product contained in the package to improve its preservation and acceptability.

Among the actions performed to improve the quality of products contained in the packaging are the following:
- Introducing certain compounds in the package, such as oxygen trappers, humidity absorbers or antimicrobial agents.
- Introducing new components, whether dissolved or incorporated in the package material as antioxidants.

These known solutions for protecting and improving packaged products suffer from certain drawbacks, such as a modification of the organoleptic properties of the products due to the entry of foreign agents and an irregular distribution of the protective properties, as protection is performed by direct contact. Another clear drawback is the difficulty of manufacturing a film for each case.

An active varnish of any kind is not known that incorporates the active substance in the varnish itself, the active substance being meant to transfer the main characteristic.

It is known in the state of the art the patents JP 02171171 A which discloses a manufacturing process of a packaging material by adding a natural antioxidant. It is also known the patent JP 53038186 wherein it is disclosed a manufacturing process of a multilayer film wherein the base film has a low gas permeability and a vegetable extract of essential oil of spicery is applied onto the base film. It is finally known a process of preparing an alkaline solution of Labiatae antioxidants as the one disclosed in US 5061403.

Thus, the object of the present invention is to overcome the aforementioned drawbacks, developing for such purpose a varnish with an antioxidant incorporated in its composition, using the vanish itself as a vehicle of a vapour phase for food preservation, thereby preventing the need to introduce the antioxidant in the product or to incorporate it in the packaging material.

### DESCRIPTION OF THE INVENTION

The antioxidant active varnish is basically a varnish composed of solvents and resins, with an active antioxidant agent added to the varnish composition in order to prevent or reduce the oxidation of the products contained within.

The purpose of the solvents is to confer to the film the fluidity required to apply it, as these are volatile substances that evaporate upon drying, including ethyl acetate to dissolve the resins and ethanol as a latent solvent.

Resins form the base of the film or layer that is deposited on the support after the solvents evaporate. The nature of these resins will be different according to each support on which they are applied. In addition, the varnish also contains plasticisers meant to provide the final product with a degree of elasticity, so that the product obtained is not brittle.

It is also provided with an adherence promoter meant to increase the adherence of resins to the support, preventing their detachment, the nature of which will also be different according to the support on which they are deposited.

Finally, the varnish has an active principle meant to transfer the main property to the varnish. The active principle, in this case an antioxidant, has two basic forms of activity.

The first one is a result of the generation of a vapour phase that can transfer elements of the composition through the varnish to the atmosphere adjacent to the varnished support, eliminating or delaying the oxidation of the food or product. The second form of activity is by contact, transferring the activity to the product or food remaining in contact with the varnished support, carrying out the same activity as the "vapour phase" of the extract.

The varnish is made by dosing out each component in a container, following a component solution or dispersion process with stirrers. The stirring time shall be as required to obtain a perfect solution or dispersion of all the components, according to the power and speed of the stirrer, the temperature and the amount to be prepared.

The application systems on the support can involve rollers, tampography, serigraphy or spraying. In addition, the amount of varnish to be deposited shall depend on the food to be protected, its lifetime and the efficiency sought.

Supports on which the varnish can be applied are:
- Polypropylene in all its variants
- Polyethylene, with all its variants
- Polyester (PET, PETG)
- PVDC
- Polystyrene, with all its variants
- PVC
- Polyamide
- Polycarbonate
- Cellulose films (cellophane) with all its variants
- KRAFT
- Paper with all its variants
- Aluminium
- Tin
- Steel
- Glass

As well as all the complexes that may be formed by these supports (by adhesion, rolling or extrusion).

### DESCRIPTION OF THE DRAWINGS

As a complement of the description provided hereunder and in order to aid a better understanding of the characteristics of the invention, the present descriptive memory is accompanied by a set of drawings showing figures where, for purposes of illustration only and in a non-limiting manner, the more significant details of the invention are represented.
Figure 1 shows a graph of the protection against oxidation as a percentage versus time.
Figure 2 shows the composition table for the varnish object of the invention in a preferred embodiment.

### PREFERRED EMBODIMENT OF THE INVENTION

In view of the figures, a preferred embodiment of the invention disclosed is provided in what follows.

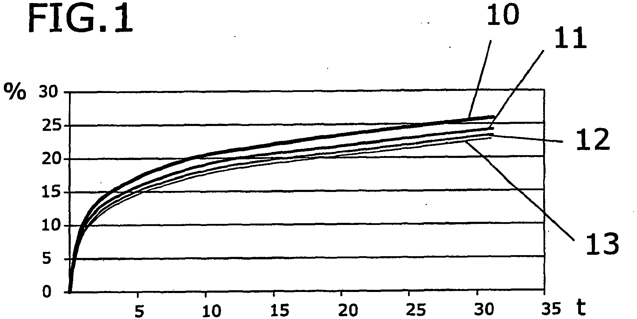

Figure 1 shows a graph obtained from an experimental study that shows how the package provides an antioxidant atmosphere able to protect a wide range of products (foods, cosmetics, pharmaceutical products) against oxidation processes. This table shows the time in days on the abscissa and the % oxidation in the ordinate axis.

Specifically, the oxidation process for iron (ii) with oxygen is shown, using a sample packaging (10) without any protection against oxidation. Packagings (11), (12) and (13) have varying concentrations of antioxidant, in this case natural, incorporated to the packaging by the varnish, with greater antioxidant concentration in packaging (13) than in (12), which is in turn greater than in packaging (11). This shows that the protection against oxidation increases with the concentration of antioxidant.

The accompanying table shows the varnish components, which include solvents, resins, plasticisers, adherence promoters and active compounds.

| | COMPONENT | GROUP | AMOUNT | TOLERANCE |
|---|---|---|---|---|
| 1 | ETHYL ACETATE | SOLVENTS | 12 | ±20% |
| 2 | ETHANOL | SOLVENTS | 53 | ±20% |
| 3 | N ITRO A-400 ® | RESIN | 23 | ±10% |
| 4 | NEUREZ U322 ® | RESIN | 6 | ±5% |
| 5 | CITROFOL Bll ® | PLASTIFIZER | 2 | ±3% |
| 6 | VERTEC C I A10 ® | ADHERENCE PROMOTER | 2 | ±3% |
| 7 | ROSEMARY EXTRACT or extracts of other plants | ACTIVE COMPOUND | 2 | ±0-10% |

In this preferred embodiment, ethyl acetate is an active solvent while ethanol is a latent solvent that in the presence of ethyl acetate will dissolve the resins.

As regards the resins, which are the base of the varnish, these are Nitro A-400 and Neurez U322. In addition, the plasticiser used is Citrofol BII, which is meant to confer elasticity to the filmogen. Vertec C I A10 is meant to increase the adherence of the resins to the support, preventing their detachment; finally, the active substance is extract of rosemary or of other aromatic plants or spices, such as oregano, sweet marjoram, thyme or others containing natural antioxidants.

It is not considered necessary to extend this description for any expert in the field, which will understand the scope of the invention, and the advantages derived thereof.

The materials, shape, size and arrangement of the elements may vary as long as the essence of the invention is not changed.

The terms used in this description should be understood in a wide and not limiting sense.

## Claims

1. Antioxidant active varnish, from among varnishes applied to supports for products, preferably foods, composed of an active compound which is a natural antioxidant **characterized in that** it is combined with:
- solvents, to confer fluidity to the varnish, including ethyl acetate to dissolve resins and ethanol as a latent solvent.
- resins, to form the base of the varnish
- plasticiers to provide to the final product with elasticity and
- adherent promoters to increase adherence of the resins to the supports,
Wherein the natural antioxidant has two form of action: in vapour phase transferring known composition elements through the varnish to the atmosphere adjacent to the varnished support; and by direct contact transferring its activity to the part of the food in contact with the varnished support.

2. Antioxidant active varnish, according to claim 1, **characterized in that** the antioxidant is a natural antioxidant, such as rosemary, oregano, sweet marjoram, thyme or other plants.

3. Antioxidant active varnish, according to claim 1, **characterized in that** the application methods are a roller, tampography, serigraphy, spray.

4. Antioxidant active varnish, according to claim 1, **characterized in that** the amount deposited on the product will depend on the food to be protected, its lifetime and in short of the efficiency required in each case.

5. Support or film comprising an antioxidant active varnish according to claim 1 **characterized in that** the supports or films for applying the varnish are:
- Polypropylene in all its variants
- Polyethylene, with all its variants
- Polyester (PET, PETG)
- PVDC
- Polystyrene, with all its variants
- PVC
- Polyamide
- Polycarbonate
- Cellulose films (cellophane) with all its variants
- KRAFT
- Paper with all its variants
- Aluminium
- Tin
- Steel
- Glass
As well as all the complexes that may be formed by these supports (by adhesion, rolling or extrusion).

6. Antioxidant active varnish, according to claim 1, **characterized in that** its components, and their amounts and tolerances, are according to the following table:
| | COMPONENT | GROUP | AMOUNT | TOLERANCE |
|---|---|---|---|---|
| 1 | ETHYL ACETATE | SOLVENTS | 12 | ±20% |
| 2 | ETHANOL | SOLVENTS | 53 | ±20% |
| 3 | NITRO A-400 ® | RESIN | 23 | ±10% |
| 4 | NEUREZ U322 ® | RESIN | 6 | ±5% |
| 5 | CITROFOL BII® | PLASTIFIZER | 2 | ±3% |
| 6 | VERTEC C I A10® | ADHERENCE PROMOTER | 2 | ±3% |
| 7 | ROSEMARY EXTRACT or extracts of other plants | ACTIVE COMPOUND | 2 | ±0-10% |

## Patentansprüche

1. Antioxidativ wirksamer Lack aus der Gruppe der Lacke zum Auftrag auf Trägermaterialien für Produkte, vorzugsweise Lebensmittel, wobei ersterer eine Wirkstoffkomponente enthält, bei der es sich um ein natürliches Antioxidationsmittel handelt, **dadurch gekennzeichnet, dass** es kombiniert wird mit:
- Lösungsmitteln, um dem Lack Fließvermögen zu verleihen, wie etwa Ethylacetat zum Lösen von Harzen und Ethanol als latenter Löser
- Harzen als Lackbasis
- Weichmachern zur Gewährleistung der Elastizität des Endprodukts und
- Haftungsförderern zur Verbesserung der Haftung der Harze auf den Trägermaterialien,
wobei das natürliche Antioxidationsmittel sich durch zwei Wirkungsweisen auszeichnet: in der Dampfphase durch Übertragung der bekannten Einzelbestandteile durch den Lack in die das lackierte Trägermaterial umgebende Atmosphäre sowie durch Weitergabe seiner Wirkung auf den mit dem lackierten Trägermaterial in Berührung kommenden Teil des Lebensmittels durch direkten Kontakt.

2. Antioxidativ wirksamer Lack gemäß Anspruch 1, **dadurch gekennzeichnet, dass** es sich beim Antioxidationsmittel um ein natürliches Antioxidans handelt, das z. B. aus Rosmarin, Oregano, Majoran, Thymian oder anderen Pflanzen gewonnen wird.

3. Antioxidativ wirksamer Lack gemäß Anspruch 1, **dadurch gekennzeichnet, dass** die Auftragsverfahren die Aufbringungsmethoden Walzenauftrag, Tampondruck, Siebdruck und Sprühauftrag umfassen.

4. Antioxidativ wirksamer Lack gemäß Anspruch 1, **dadurch gekennzeichnet, dass** die auf das Produkt aufgetragene Menge auf der Art des Lebensmittels, das geschützt werden soll, dessen Lebensdauer und ansonsten auf dem jeweils angestrebten Wirkungsgrad basiert.

5. Trägermaterial oder Folie, bestehend aus einem antioxidativ wirksamen Lack gemäß Anspruch 1, **dadurch gekennzeichnet, dass** es sich bei den Trägermaterialien oder Folien zum Auftrag des Lacks um folgende Materialien handelt:
- Polypropylen in allen Varianten
- Polyethylen mit allen Varianten
- Polyester (PET, PETG)
- PVDC
- Polystyrol mit allen Varianten
- PVC
- Polyamid
- Polycarbonat
- Zellglasfolien (Zellophan) mit allen Varianten
- Kraftpapier
- Papier mit allen Varianten
- Aluminium
- Blech
- Stahl
- Glas
sowie sämtliche Komplexe, die potenziell (durch Adhäsion, Walzenauftrag oder Extrusion) aus diesen Trägermaterialien gebildet werden können.

6. Antioxidativ wirksamer Lack gemäß Anspruch 1, **dadurch gekennzeichnet, dass** sich dessen Bestandteile und deren Mengen und Toleranzen wie in der folgenden Tabelle aufgeführt gestalten:
| | BESTANDTEIL | KATEGORIE | MENGE | TOLERANZ |
|---|---|---|---|---|
| 1 | ETHYLACETAT | LÖSUNGSMITTEL | 12 | ± 20% |
| 2 | ETHANOL | LÖSUNGSMITTEL | 53 | ±20% |
| 3 | NITRO A-400^{®} | HARZ | 23 | ±10% |
| 4 | NEUREZ U322^{®} | HARZ | 6 | ±5% |
| 5 | CITROFOL BII^{®} | WEICHMACHER | 2 | ±3% |
| 6 | VERTEC C I A10^{®} | HAFTUNGSFÖDERER | 2 | ±3% |
| 7 | ROSMARINEXTRAKT oder andere Pflanzenextrakte | WIRKSTOFF | 2 | ±0-10% |

## Revendications

1. Vernis actif antioxydant, d'entre les vernis appliqués aux supports de produits, de préférence alimentaires, constitué d'un composant actif, qui est un antixoydant naturel, **caractérisé en ce qu'**il est associé à:
- des solvants, pour conférer de la fluidité au vernis, notamment de l'acétate d'éthyle pour dissoudre des résines et de l'éthanol comme solvant latent.
- des résines, pour constituer la base du vernis
- des agents plastifiants pour apporter de l'élasticité au produit final et
- des promoteurs d'adhérence, afin d'augmenter l'adhésion des résines aux supports,
dans lequel l'antioxydant naturel a deux façons d'agir : en phase vapeur, en transférant des éléments de composition connus à travers le vernis dans l'atmosphère environnant du support verni, et par contact direct en transférant son activité à la partie de l'aliment en contact avec le support verni.

2. Vernis actif antioxydant, selon la revendication 1, **caractérisé en ce que** l'antioxydant est un antioxydant naturel, tel que le romarin, l'origan, la marjolaine, le thym ou d'autres plantes.

3. Vernis actif antioxydant, selon la revendication 1, **caractérisé en ce que** les méthodes d'application sont au rouleau, par tampographie, sérigraphie, pulvérisation.

4. Vernis actif antioxydant, selon la revendication 1, **caractérisé en ce que** la quantité déposée sur le produit dépendra de la nourriture à protéger, sa durée de vie et en somme, de l'efficacité requise dans chaque cas.

5. Support ou film comprenant un vernis actif antioxydant selon la revendication 1, **caractérisé en ce que** les supports ou films pour l'application du vernis sont:
- en polypropylène, dans toutes ses variantes
- en polyéthylène, dans toutes ses variantes
- en polyester (PET, PETG)
- en PVDC
- en polystyrène, dans toutes ses variantes
- en PVC
- en polyamide
- en polycarbonate
- des films de cellulose (cellophane) dans toutes ses variantes
- en papier KRAFT
- en papier dans toutes ses variantes
- en aluminium
- en étain
- en acier
- en verre
Ainsi que tous les complexes qui peuvent être formés par ces supports (par collage, laminage ou extrusion).

6. Vernis actif antioxydant, selon la revendication 1, **caractérisé en ce que** ses composants, leurs quantités et tolérances sont conformes au tableau suivant:
| | COMPOSANT | GROUPE | QUANTITÉ | TOLÉRANCE |
|---|---|---|---|---|
| 1 | ACÉTATE D'ÉTHYLE | SOLVANT | 12 | ±20 % |
| 2 | ÉTHANOL | SOLVANT | 53 | ±20 % |
| 3 | NITRO A-400^{®} | RÉSINE | 23 | ±10 % |
| 4 | NEUREZ U322^{®} | RÉSINE | 6 | ±5 % |
| 5 | CITROFOL BII^{®} | AGENT PLASTIFIANT | 2 | ±3 % |
| 6 | VERTEC C I A10^{®} | PROMOTEUR D'ADHÉRENCE | 2 | ±3 % |
| 7 | EXTRAIT DE ROMARIN ou extraits d'autres plantes | COMPOSÉ ACTIF | 2 | ± 0-10 % |
